# EUROPÄISCHE PATENTANMELDUNG

(11) **EP 1 734 328 A2**
(43) Veröffentlichungstag der Anmeldung: **20.12.2006**
(21) Anmeldenummer: 06115117.1
(22) Anmeldetag: 08.06.2006
(51) Int. Cl.: F28D 20/02

(54) **Latentwärmespeicher**

(30) Priorität: 17.06.2005 DE 202005009498 U; 30.09.2005 DE 202005015393 U
(71) Anmelder: Matino GmbH, 16866 Kyritz (DE)
(72) Erfinder: Fieback, Klaus, 14467, Potsdam (DE)
(74) Vertreter: Müller, Enno

(57) **Zusammenfassung**

Die Erfindung betrifft einen Latentwärmespeicher (1) mit einem Latentwärmespeichermaterial (2) und einem Aufnahmekörper, wobei der Aufnahmekörper Wandungen (3, 4, 5, 6) aufweist, die an ihrer Innenseite (7) in unmittelbaren Kontakt mit dem Latentwärmespeichermaterial (2) sind. Um einen Latentwärmespeicher anzugeben, bei dem auch beim Ausspeichern von Wärme ein günstiger Wärmeübergang von dem Latentwärmespeichermaterial auf die Wandungen des Latentwärmespeichers sichergestellt ist, wird vorgeschlagen, dass jedenfalls die Innenseite (7) aus einem Werkstoff besteht oder eine Oberflächenbeschaffenheit aufweist, der bzw. die eine Anhaftung von verfestigtem Latentwärmespeichermaterial (2) nicht oder nur in sehr geringem Ausmaß zulässt.

## Beschreibung

Die Erfindung betrifft zunächst einen Latentwärmespeicher mit einem Latentwärmespeichermaterial und einem Aufnahmekörper, wobei der Aufnahmekörper Wandungen aufweist, die an ihrer Innenseite im unmittelbaren Kontakt mit dem Latentwärmespeichermaterial sind.

Latentwärmespeicher sind bereits in sehr vielen unterschiedlichen Ausgestaltungen bekannt geworden. Insbesondere kennt man im grundsätzlichen Aufbau kasten- oder kassettenartige Latentwärmespeicherkörper. Etwa solche, wie sie auch in der WO 2003/102484A2 angesprochen und beschrieben sind.

Hinsichtlich Latentwärmespeichermaterial, das auch als PCM (phase change material) bezeichnet wird, sind verschiedenartig basierte Latentwärmespeichermaterialien bekannt, insbesondere kennt man paraffinbasiertes Latentwärmespeichermaterial und salzbasiertes Latentwärmespeichermaterial. Hierzu (Paraffin) wird bspw. auf die WO 02/08353A2 verwiesen und auch (Salz) auf die WO 2004/061044A1. Durch die unterschiedlichen Zusammensetzungen und Beimengungen, die in einem solchen Latentwärmespeichermaterial enthalten sind, können sich auch unterschiedliche Eigenschaften, insbesondere, wie sie im vorliegenden Zusammenhang von Bedeutung sind, unterschiedliche Hafteigenschaften bezüglich Wandungen des Aufnahmekörpers, in dem das Latentwärmespeichermaterial gefangen ist, ergeben.

Latentwärmespeichermaterial wechselt (geladen) zwischen einem flüssigen und einem (entladen) verfestigten Zustand. Grundsätzlich besteht die Problematik, dass beim Ausspeichern infolge von sich an den Innenseiten der Wandungen bildenden und dann dort anhaftenden verfestigten Schichten des Latentwärmespeichermaterials der Wärmedurchgang, gegebenenfalls auch nur örtlich, verschlechtert ist. Man spricht auch von "Panzerbildung". Es stellen sich Ungleichmäßigkeiten im Betrieb ein oder die gewünschte Reaktionszeit des Latentwärmespeichers wird nicht erreicht. Insbesondere wird hierdurch auch die normalerweise im Inneren des Latentwärmespeichers gegebene natürliche Konvektion gestört oder sogar unterbrochen, wodurch der Wärmeübergang nochmals stark reduziert wird.

Hiervon ausgehend stellt sich der Erfindung die Aufgabe, einen Latentwärmespeicher anzugeben, bei dem auch beim Ausspeichern von Wärme ein günstiger Wärmeübergang von dem Latentwärmespeichermaterial auf die Wandungen des Latentwärmespeichers sichergestellt ist.

Die Erfindung schlägt zur Lösung der Aufgabe vor, dass jedenfalls die Innenseite der Wandungen aus einem Werkstoff besteht oder eine Oberfläche aufweist, der bzw. die eine Anhaftung von verfestigtem Latentwärmespeichermaterial nicht oder nur in sehr geringem Ausmaß zulässt. Es wurde beobachtet, dass sich dann auch gerade beim Ausspeichern von Wärme, also bei Abkühlung des Latentwärmespeichermaterials, entscheidende Verbesserungen ergeben. Dadurch, dass verfestigte Teile oder Schichten des Latentwärmespeichermaterials, die sich weiterhin bilden, nicht mehr an der Wandung anhaften können, bleibt auch beim Ausspeichern von Wärme die an sich gegebene Konvektionsbewegung, sei es durch Aufsteigen von wärmeren Teilmengen und Absinken von kälteren Teilmengen oder durch Absinken von dichteren Bestandteilen und entsprechendes Aufsteigen von weniger dichten Bestandteilen, erhalten. Die Zerstörung dieser Konvektion, wie sie bislang zu beobachten war, tritt nicht mehr ein. Sich bildende Verfestigungen bzw. Bereiche höherer Dichte sinken ab und noch flüssige Bestandteile bzw. Bestandteile geringerer Dichte des Latentwärmespeichermaterials gelangen durch Auftrieb (natürliche Konvektion) an deren Stelle. Es können auch nicht mehr so große, zusammenhängende Bereiche (Platten) von verfestigtem Latentwärmespeichermaterial in dieser Übergangsphase, wo noch keine durchgehende Verfestigung gegeben ist, wachsen.

Da die Latentwärmespeichermaterialien wie angesprochen auf sehr unterschiedlichen Stoffen beruhen können, ist es bevorzugt, dass die entsprechende Antihaftausstattung oder gegebenenfalls Beschichtung, wie nachstehend noch erläutert, in Anpassung an das jeweilige Latentwärmespeichermaterial gewählt ist.

Die Erfindung betrifft des Weiteren einen Latentwärmespeicher nach den Merkmalen des Oberbegriffs des Anspruches 1 oder nach Anspruch 1, wobei weiter die Wandungen des mit im Vergleich zu einer Länge geringen Dicke ausgebildeten Latentwärmespeichers aus einem metallischen Blech bestehen und an Randkanten des Latentwärmespeichers Verbindungen zwischen den Wandungen ausgebildet sind.

Derartige Latentwärmespeicher sind aus der eingangs zitierten Literatur bekannt.

Im Hinblick auf den bekannten Stand der Technik wird eine technische Problematik der Erfindung dahin gesehen, einen Latentwärmespeicher der in Rede stehenden Art in seiner vorgegebenen Form zu stabilisieren, dies weiter unter Verbesserung des Wärmeübergangs der Wandungen untereinander.

Diese Problematik ist zunächst und im Wesentlichen durch den Gegenstand des Anspruches 2 gelöst, wobei darauf abgestellt ist, dass mindestens eine weitere inselartige Verbindung in Dickenrichtung des Latentwärmespeichers zwischen den Wandungen ausgebildet ist. Zufolge dieser Ausgestaltung ist eine Stabilisierung des Latentwärmespeichers erreicht, so insbesondere in Dickenrichtung desselben. Die im Zuge der Phasenänderung sich ergebende Volumenänderung des Latentwärmespeichermaterials führt zufolge der inselartigen Verbindung nicht zu übermäßigen Maßveränderungen in Dickenrichtung des Speichers. Die durchaus erforderliche Dickenveränderung des Speichers infolge der Volumenveränderung des Speichermaterials beschränkt sich auf ein zu tolerierendes Maß, wobei in Abhängigkeit von der Tauscher-Grundfläche eine entsprechende Anzahl von inselartigen Verbindungen gewählt ist, um hierüber steppartige Verbindungen der Grundflächenwandungen zueinander zu erzielen. Einem übermäßigen Ausbauchen der Grundflächenwandungen ist hierdurch entgegengewirkt. Weiter erweist sich die vorgeschlagene Lösung auch hinsichtlich eines verbesserten Wärmeübergangs zwischen den beiden GrundflächenWandungen als vorteilhaft. So ergibt sich durch jede inselartige Verbindung eine weitere Kontaktstelle (Temperaturbrücke) zwischen diesen Wandungen, was den Temperaturausgleich weiterhin fördert.

Die Gegenstände der weiteren Ansprüche sind nachstehend in Bezug zu dem Gegenstand des Anspruches 1 oder in Bezug zu dem Gegenstand des Anspruches 2 oder darüber hinaus in Bezug zu einer Kombination der Gegenstände 1 und 2 erläutert, können aber auch in ihrer unabhängigen Formulierung von Bedeutung sein.

Da grundsätzlich metallische Aufnahmekörper bevorzug sind, ist es im Weiteren bevorzugt, diese auf der Innenseite zu beschichten oder entsprechend die Oberfläche zu behandeln. Insoweit kann es bereits ausreichen, die Oberfläche sehr glatt zu gestalten. Etwa durch eine nanotechnologische Bearbeitung der Oberfläche. So ist weiter bei einer Ausgestaltung des Aufnahmekörpers aus Aluminium eine innere Oberflächengestaltung vorgesehen, deren mittlere Rauheit Rₐ kleiner 5 µm beträgt, so bspw. 2,3,4 oder kleiner als 1µm.

Hinsichtlich Beschichtung wird bevorzugt auf Stoffe wie Epoxi-Phenol Lack oder Epoxydharzlack zurückgegriffen. Auch ist eine Teflonbeschichtung (PTFE) gegebenenfalls vorteilhaft. Darüber hinaus kann eine Eloxalbeschichtung vorgesehen sein. Verfahrensmäßig kann die Beschichtung im Wege der Pulverbeschichtung aufgebracht sein.

Die geometrische Gestalt eines solchen Latentwärmespeicherkörpers kann sehr unterschiedlich sein. Bevorzugt sind Abmessungen von beispielsweise 30 x 30, 30 x 45, 30 x 60 oder 60 x 60 cm. Auch kann die geometrische Gestalt an einem Quadratmeter orientiert sein. Beispielsweise kann es sich dann um Grundflächen der Abmessungen 80 x 80 oder 90 x 90 oder eben 100 x 100 cm handeln. Entsprechend kann die Grundfläche im Bereich von 0,05 bis bspw. 2 qm variieren. Es können auch nicht nur quadratische, sondern auch, wie schon angesprochen, rechteckige Grundrisse gegeben sein. Innerhalb der bspw. angesprochenen Grenzen kann es sich um jede Kombination entsprechender Randabmessungen handeln.

Die Dicke derartiger Latentwärmespeicher ist vergleichsweise gering. Sie liegt etwa im Bereich von 0,5 bis 5 % der Länge einer Randkante. In der Praxis haben sich bspw. Dicken zwischen 5 und 20 mm bewährt.

Die Wandungen sind entsprechend dünn und bestehen, wenn der Latentwärmespeicherkörper aus einem metallischen Material besteht, in der Regel aus einem entsprechenden Metallblech. Dieses kann Dicken zwischen 0,1 und 1 mm aufweisen. Insbesondere kann das Metallblech auch strukturiert sein. Etwa durch, gegebenenfalls auch rasterförmig verlaufende, Sicken oder Prägungen. Gerade in Kombination mit der hier beschriebenen Antihaftausgestaltung sind solche Strukturierungen, die entsprechend die Verwendung dünnerer Bleche ermöglichen, einsetzbar ohne dass es zu den genannten nachteiligen Effekten kommt.

Die Beschichtung kann auch aus einer entsprechenden (Kunststoff-) Folie bestehen. Es kann sich auch um ein Graphitfolie oder Graphitverbundfolie handeln. Letztere ist gerade im Hinblick auf den Wärmedurchgang, der in diesem Zusammenhang natürlich von Bedeutung ist, vorteilhaft. Bevorzugt sind solche Folien diffusionsdicht, um einen Korrosionsangriff auf die Wandung des Latentwärmespeichers zu verhindern.

Soweit die Folie aus den angesprochenen Kunststoffmaterialien besteht, kann sie insgesamt auch oder, bei Mehrlagigkeit, hinsichtlich der inneren Lage, aus einem PTFE-Werkstoff und/oder einem Epoxiharz-Werkstoff bestehen.

Die vorgeschlagene inselartige Verbindung ist bevorzugt lediglich eine durch Umformen gebildete Verbindung, so weiter bevorzugt durch Kaltumformen, wie insbesondere durch Toxen. Eine gegebenenfalls vorgesehene Beschichtung der inneren Oberflächen wird zufolge der vorgeschlagenen Umformung nicht beeinträchtigt. Entsprechend ist auch im unmittelbaren Bereich der inselartigen Verbindung einem Anhaften von verfestigten Teilen oder Schichten des Latentwärmespeichermaterials entgegengewirkt.

Eine weitere Verbesserung hinsichtlich des Temperaturausgleichs zwischen den wirksamen Grundflächen ist dadurch erreicht, dass umgebend zu der inselartigen Verbindung eine Einsenkung der Wandung in Richtung der gegenüberliegenden Wandung vorgenommen ist. Hierdurch ergeben sich tellerartige Vertiefungen auf beiden wirksamen Wandungs-Grundflächen. Das Flächenmaß einer solchen tellerartigen Einsenkung entspricht etwa 0,2 bis 5 % der zugeordneten wirksamen Grundfläche des Speichers, so weiter bevorzugt ca.1 % der wirksamen Grundfläche.

Als besonderes vorteilhaft erweist es sich diesbezüglich weiter, dass die Einsenkungen der gegenüberliegenden Wandungen gegeneinander anliegen, so weiter bevorzugt über die gesamte Einsenkfläche. Die Kontaktfläche entspricht demzufolge der Einsenkfläche. Es sind hierdurch innenliegende Temperaturbrücken geschaffen.

Die Einsenkung ist bevorzugt kreisförmig ausgebildet. Denkbar sind diesbezüglich auch andere geometrische Grundformen, so bspw. Einsenkungen mit quadratischer oder rechteckiger Grundfläche. Die inselartige Verbindung kann zentral in der Einsenkung platziert sein. Jedoch sind auch dezentrale Positionierungen möglich, weiter auch das Vorsehen mehrerer Tox-Punkte bzw. inselartiger Verbindungen innerhalb einer Einsenkung.

Die Wandungen des Latentwärmespeichers bestehen aus dünnen Blechen, so insbesondere aus Aluminiumblechen mit einer Dicke zwischen 0,1 und 1 mm.

Der Latentwärmespeicher ist praktisch vollständig mit Latentwärmespeichermaterial gefüllt derart, dass die beim Phasenwechsel auftretende Volumenänderung durch elastische Verformung der Wandungen aufgenommen ist, welche elastische Verformung durch die vorgesehene inselartige Verbindung maßlich begrenzt nahezu gleichmäßig über die Grundfläche verteilt erfolgt. Zufolge dieser elastischen Verformbarkeit insbesondere der wirksamen Grundflächen-Wandung bilden sich keine Luftschichten zwischen dem Latentwärmespeichermaterial und der Blechinnenwandung, zufolge dessen der Wärmeübergang stets sehr gut ist. Es ist in jeder Phase ein vollständiger Kontakt zwischen dem Latentwärmespeichermaterial und der Wandung gegeben.

Eine weitere Vergrößerung der Kontaktfläche zwischen den gegenüberliegenden, wirksamen Grundflächen des Speichers ist dadurch erreicht, dass die Bleche an den Randkanten durch Umbördeln und/oder durch Verkleben miteinander verbunden sind. Hierdurch sind Kontaktflächen geschaffen, die, wie auch die vorbeschriebenen Einsenkungen und inselartigen Verbindungen Temperaturbrücken bilden. Im Bereich der Blechrandkanten sind hierdurch Kontaktflächen geschaffen, die etwa 3 bis 15 %, so weiter bevorzugt 5 bis 10 %, bspw. 8 % der gesamten, wirksamen Speicheroberfläche entsprechen. Durch die hierdurch geförderte Leistungsübertragung von einer Wandungsoberfläche zur gegenüberliegenden Fläche ist selbst eine einseitige Nutzung des Latentwärmespeichers ermöglicht. Es ergeben sich keine Zonen mit größeren Temperaturunterschieden. Die homogene Umwälzung des Latentwärmespeichermaterials zufolge der Konvektion und die entsprechende Ausspeicherung von Wärme ist zufolge dessen nicht gestört.

Nachstehend ist die Erfindung des Weiteren anhand der beigefügten Zeichnung, die jedoch nur eine schematische Erläuterung und eine beispielhafte Ausgestaltung darstellt, in weiterer Einzelheit beschrieben. Hierbei zeigt:
- Fig.1: eine schematische, perspektivische Ansicht eines typischen Latentwärmespeichers;
- Fig. 2: einen Querschnitt durch den Gegenstand gem. Fig. 1, geschnitten entlang der Linie II-II, im geladenen Zustand;
- Fig. 3: eine vergrößerte Darstellung gemäß Fig. 2, während des Ausspeicherns von Wärme;
- Fig. 4: in perspektivischer Darstellung einen Latentwärmespeicher in einer zweiten Ausführungsform;
- Fig. 5: die Herausvergrößerung des Bereiches V in Fig. 4;
- Fig. 6: den vergrößerten Schnitt gemäß der Linie VI-VI in Fig. 4;
- Fig. 7: den vergrößerten Schnitt gemäß der Linie VII-VII in Fig. 4;
- Fig. 8: den vergrößerten Schnitt gemäß der Linie VIII-VIII in Fig. 4.

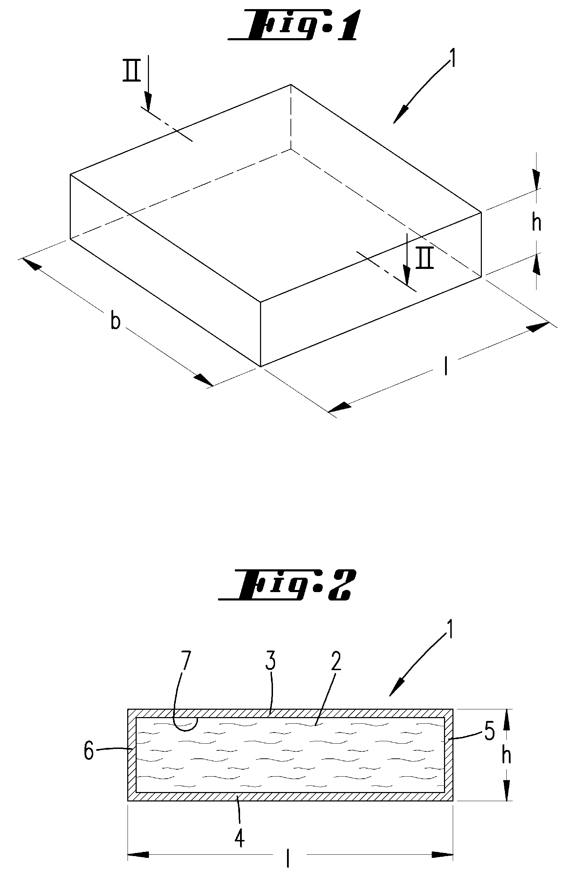

Dargestellt und beschrieben ist mit Bezug zu den Fig.1 bis 3 eine erste Ausführungsform eines Latentwärmespeichers 1 in dessen geschlossenen Innenraum ein Latentwärmespeichermaterial 2 aufgenommen ist.

Der Latentwärmespeicher 1 ist kassettenartig aufgebaut und weist einen rechteckigen Grundriss mit einer Breite b, einer Länge 1 und einer Höhe h auf.

Die Wandungen 3, 4, 5, 6 des Latentwärmespeichers 1 sind aus einem Metallblech gebildet. Auf der jeweiligen Innenseite 7 einer Wandung 3, 4, 5, 6 ist eine Oberflächenbeschichtung in Form eines Epoxi-Phenol-Lackes aufgebracht.

Das Latentwärmespeichermaterial 2 ist salzbasiert. Gerade bei salzbasiertem Latentwärmespeichermaterial empfiehlt sich eine Antihaftbeschichtung auf Basis von organischem Material. Bei paraffinbasiertem Latentwärmespeichermaterial kann bereits eine entsprechende Oberflächenbehandlung, bspw. Polierung bis hin zu Hochglanzpolierung der entsprechenden Innenfläche ausreichend sein.

Jedenfalls ist bevorzugt, sei es mit einer Antihaftbeschichtung oder ohne eine solche, dass die Rauhigkeit der Innenfläche, die Rauhtiefe RA im Bereich von 0,01 bis 0,1 µm liegt. Bevorzugt im Bereich von 0,02 bis hin zu etwa 0,5 µm. Hierbei sind auch alle diesbezüglichen Zwischenstufen wie etwa 0,02 bis 0,49, ... bis 0,48 etc. und oder 0,03 bis 0,5, 0,04 bis ... etc. angesprochen, auch unter Einengung beider Begrenzungen in den angegebenen Schritten, also etwa, 0,03 bis 0,49, 0,04 bis 0,48 µm etc.

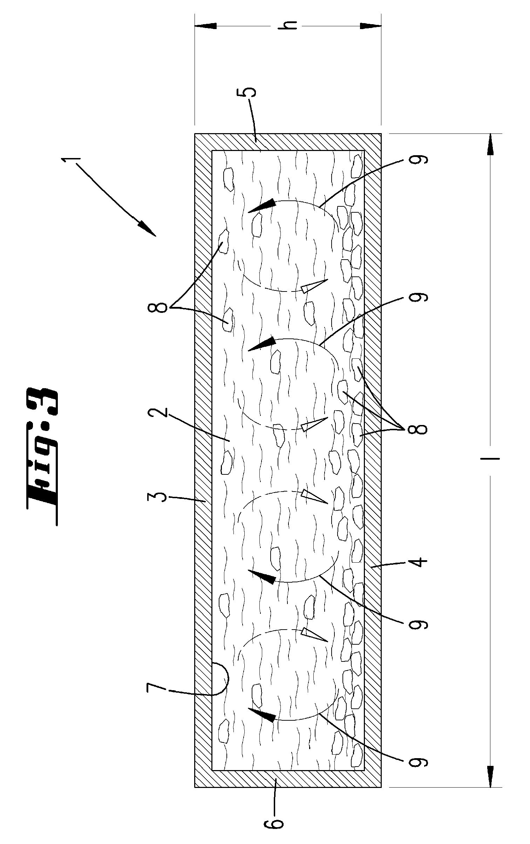

Bei dem mit Wärme geladenen Latentwärmespeicher 1 gemäß Fig. 2 ist das Latentwärmespeichermaterial 2 vollständig in flüssigem Zustand.

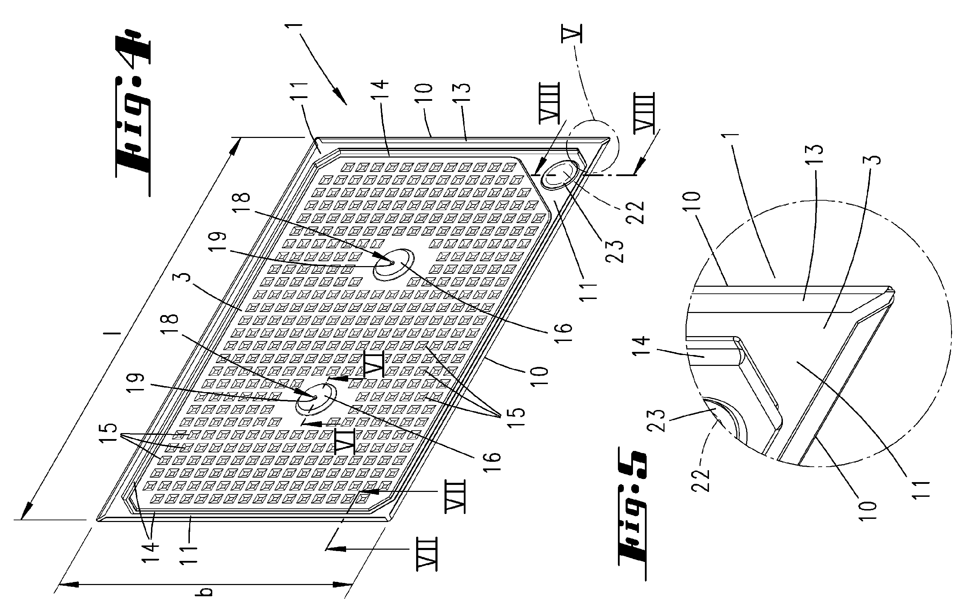

Beim Entladen des Latentwärmespeichers 1, was bspw. dadurch geschieht, dass man relativ kühlere Luft über die Außenflächen des Latentwärmespeichers 1 streichen lässt, kommt es an den Innenflächen 7 der Wandungen 3, 4, 5 und 6 zunächst zu einer Abkühlung des benetzenden Latentwärmespeichermaterials und dann auch zu Verfestigungen, die hier lediglich zur Verdeutlichung der Vorgänge beispielhaft als Festteilchen 8 zeichnerisch dargestellt sind. Diese Festteilchen 8 haften jedoch nicht an der Innenfläche 7 bspw. der oberen Wandung 3, sondern sinken aufgrund der wie durch die Pfeile 9 in Fig. 3 wiedergegebenen Konvektion (Naturumtrieb) in dem Latentwärmespeicher 1 nach unten ab, so dass noch flüssige Bestandteile des Latentwärmespeichermaterials 2 nachströmen können. Insofern kommt es über einen längeren Zeitraum nicht zu einer Unterbrechung der konvektiven Vorgänge im Latentwärmespeicher 1 im Zuge des Ausspeicherns von Wärme, wodurch der Wärmeübergang über einen langen Zeitraum sehr günstig bleibt und die Ausspeicherung von Wärme sich entsprechend ungestört und effektiv vollziehen kann.

Insbesondere kommt es gleichsam zu einem Auffülleffekt von unten, wenn, wie im Ausführungsbeispiel unterstellt, der wesentliche Wärmeübergang sich durch die obere Wand 3 vollzieht. Nämlich zu einem Auffülleffekt von verfestigten Bestandteilen des Latentwärmespeichermaterials am Boden, Wandung 4, während im oberen und letztlich wandnahen Bereich, Wandung 3, die Konvektion erhalten bleibt. Dies letztlich sogar im Mikrobereich.

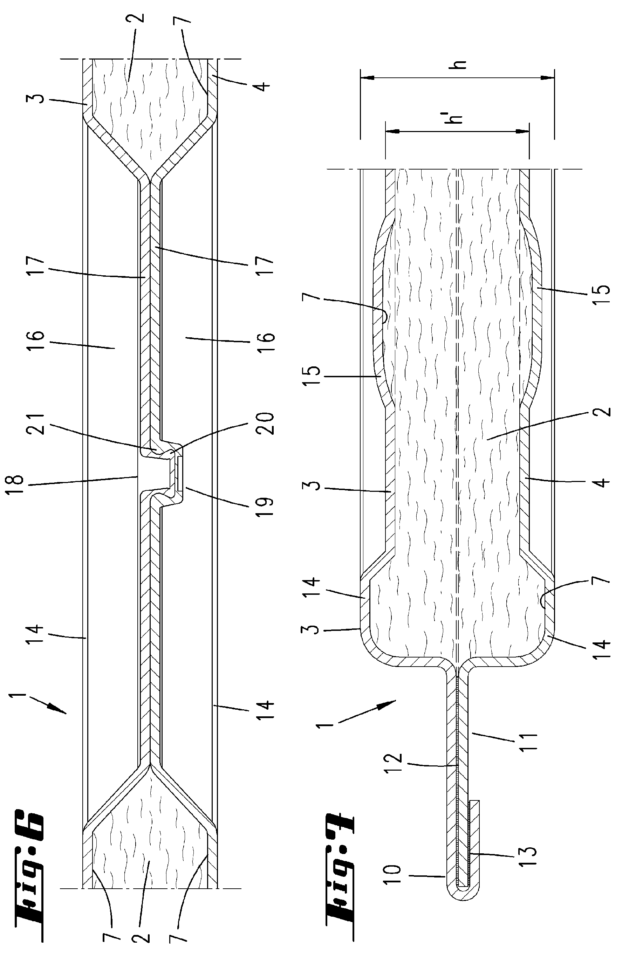

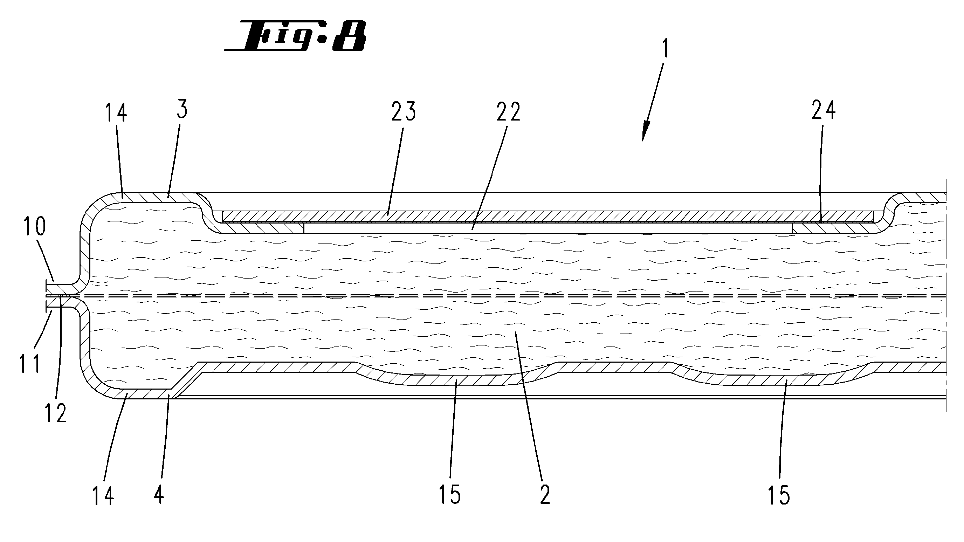

Zeigen die Fig. 1 bis 3 schematisch einen Latentwärmespeicher 1 und die Wirkungsweise des darin befindlichen Latentwärmespeichermaterials 2, so ist in den Fig. 4 bis 8 anhand eines weiteren Ausführungsbeispiels ein Latentwärmespeicher 1 dargestellt, der insgesamt kassettenartig, plattenförmig ausgebildet ist.

Dieser Latentwärmespeicher 1 weist ein Längen-Breiten-Verhältnis von etwa 3 : 2 auf, dies bei einer beispielhaften Kantenlängen 1 von 450mm und einer Kantenlänge b von 300 mm. Die Dicke bzw. Höhe h dieses Speichers entspricht mit etwa 10 mm etwa 2 % der Speicherlänge 1.

Der Latentwärmespeicher 1 ist aus zwei Aluminiumblechen gefertigt, mit einer jeweiligen Materialstärke von weniger als 1 mm.

Die beiden Bleche sind entlang der Randkanten 10 durch Umbördeln und Verkleben miteinander verbunden (vgl. Fig. 5 und 7). Die Verklebung erfolgt gemäß der Darstellung in Fig. 7 über ein Maß von etwa 10 mm entlang der Randkanten 10, demzufolge sich umlaufend ein etwa 10 mm breiter Brücken-Kontaktabschnitt 11 ergibt, in dem die beiden gegenüberliegenden Bleche bzw. Wandungen 3 und 4 flächig aufeinander liegen. Die Verklebung ist mit dem Bezugszeichen 12 versehen.

Wie weiter insbesondere aus der Darstellung in Fig. 7 zu erkennen, ist eine der Wandungen, in dem dargestellten Ausführungsbeispiel die Wandung 3 randkantenseitig umbördelt. In der hierdurch gebildeten Bördeltasche 13 liegt der freie Randabschnitt der gegenüberliegenden Wandung 4 ein, dies unter beidseitiger Verklebung mit den Abschnitten der Wandung 3.

Zur Bildung des das Latentwärmespeichermaterial 2 aufnehmenden Hohlraumes sind die Wandungsabschnitte zwischen den randseitigen Kontaktabschnitten 11 in Höhenrichtung des Speichers 1 zueinander beabstandet. Das äußere Abstandsmaß h' entspricht etwa dem 0,75-fachen der Gesamthöhe h, welche Gesamthöhe h durch einen äußeren, sich unmittelbar an dem Kontaktabschnitt 11 anschließenden Wallabschnitt 14 definiert ist. Entsprechend gibt dieser Wallabschnitt 14 bzw. die sich gegenüberliegenden Wallabschnitte 14 der Wandungen 3 und 4 die Einbauhöhe des Latentwärmespeichers 1 vor.

Die wirksamen Flächen der Wandungen 3 und 4, welche umgeben von den zugeordneten Wallabschnitten 14 niveautiefer ausgerichtet sind, sind mit kissenförmigen Erhebungen 15 versehen, deren Höhe so gewählt ist, dass diese nicht über das durch den umlaufenden Wallabschnitt 14 vorgegebenen Höhenniveau ragen.

Durch die Erhebungen 15 ist eine Stabilisierung des Wandungsbleches erreicht. Zudem ist hierdurch die wirksame Oberfläche vergrößert.

In Abhängigkeit von der durch die Länge 1 und die Breite b definierten Grundfläche des Speichers 1 werden die gegenüberliegend angeordneten Wandungen 3 und 4 im Bereich ihrer durch die Wallabschnitte 14 begrenzten Flächen zusätzlich miteinander verbunden. Dies aus Stabilitätsgründen und aus Gründen der Temperaturvergleichmäßigung. Diese Verbindungen sind zunächst gebildet durch im Grundriss kreisförmige, tellerartige Einsenkungen 16. Diese weisen im Querschnitt konisch sich nach außen erweiternde Wandungen auf, dies unter Einschluss eines Winkels von etwa 45°.

Solche Einsenkungen 16 sind sowohl im Bereich der Wandung 3 als auch im Bereich der gegenüberliegenden Wandung 4 vorgesehen, dies weiter in koaxialer Ausrichtung, so dass die jeweiligen Grundflächen 17 der Einsenkungen 16 vollflächig aneinander treten. Hierdurch ist eine weitere Vergrößerung der bereits durch die verklebten Randkanten 10 erreichten Temperaturbrücken zwischen den Wandungen 3 und 4 geschaffen.

Im Bereich der Einsenkungen 16 werden die Wandungen 3 und 4 durch Kaltumformen miteinander unlösbar verbunden. Dies erfolgt in dem dargestellten Ausführungsbeispiel durch Toxen, wodurch inselartige Verbindungen 18 geschaffen sind. Die getoxten Punkte 19 sind in dem dargestellten Ausführungsbeispiel zentral der Einsenkungs-Grundflächen 17 positioniert. Es können aber auch dezentrale Toxpunkte 19 vorgesehen sein.

Durch die gewählte Kaltumformung ist eine Hintergriffverbindung 20 geschaffen, bei welcher ein durch das Umformen gebildeter Radialkragen 21 der Wandung 3 einen gleichfalls im Zuge der Umformung geschaffenen radial nach innen ragenden Kragen 21 der Wandung 4 untergreift.

Das Latentwärmespeichermaterial 2 wird im flüssigen Zustand in den Speicher 1 eingefüllt. Hierzu ist eine Füllöffnung 22 vorgesehen. Diese ist in einem Eckbereich des hier im Grundriss vergrößerten Wallabschnitts 14 platziert. Das Niveau der Füllöffnung 22 liegt unterhalb des durch den Wallabschnitt 14 definierten Maximalniveaus.

Die Füllöffnung 22 wird nach einer Befüllung mit einem Blechteil, insbesondere einem Aluminiumblechdeckel 23 verschlossen, dies unter Nutzung eines Klebers. Auch dieser Deckel 23 überragt nicht das durch den Wallabschnitt 14 definierte Höhenniveau.

Durch das gewählte dünnwandige Blechmaterial können die Wandungen 3 und 4 außerhalb der inselartigen Verbindungen die bei einem Phasenwechsel des Latentwärmespeichermaterials 2 auftretende Volumenänderung durch elastische Verformung aufnehmen. So erfolgt bei einem salzbasierten Latentwärmespeichermaterial 2 eine Volumenverringerung beim Wechsel von der flüssigen in die feste Phase, was im Querschnitt durch ein konkaves Einwölben der Wandungen 3 und 4 aufgenommen wird. Entsprechend reißt nicht der vollflächige Kontakt zwischen Latentwärmespeichermaterial 2 und den zugeordneten Innenflächen der Wandungen 3 und 4 ab.

Beim Wechsel von der festen in die flüssige Phase erfolgt entsprechend eine Volumenvergrößerung des Latentwärmespeichermaterials 2, was zur elastischen Rückstellung der Wandungen 3, 4 führt.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Latentwärmespeicher (1) mit einem Latentwärmespeichermaterial (2) und einem Aufnahmekörper, wobei der Aufnahmekörper Wandungen (3, 4, 5, 6) aufweist, die an ihrer Innenseite (7) in unmittelbaren Kontakt mit dem Latentwärmespeichermaterial (2) sind, **dadurch gekennzeichnet, dass** jedenfalls die Innenseite (7) aus einem Werkstoff besteht oder eine Oberflächenbeschaffenheit aufweist, der bzw. die eine Anhaftung von verfestigtem Latentwärmespeichermaterial (2) nicht oder nur in sehr geringem Ausmaß zulässt.

2. Latentwärmespeicher nach den Merkmalen des Oberbegriffs des Anspruches 1 oder nach Anspruch 1, wobei weiter die Wandungen (3, 4, 5, 6) des mit im Vergleich zu einer Länge (1) geringen Dicke (h) ausgebildeten Latentwärmespeichers (1) aus einem metallischen Blech bestehen und an Randkanten (10) des Latentwärmespeichers (1) Verbindungen zwischen den Wandungen (3,4) ausgebildet sind, **dadurch gekennzeichnet, dass** mindestens eine weitere inselartige Verbindung (18) in Dickenrichtung des Latentwärmespeichers (1) zwischen den Wandungen (3, 4) ausgebildet ist.

3. Latentwärmespeicher nach einem oder mehreren der vorhergehenden Ansprüche oder insbesondere danach, **dadurch gekennzeichnet, dass** die Wandung (3, 4, 5, 6) aus einem metallischen Werkstoff besteht, dessen Innenseite beschichtet oder oberflächenbehandelt ist.

4. Latentwärmespeichermaterial nach einem oder mehreren der vorhergehenden Ansprüchen oder insbesondere danach, **dadurch gekennzeichnet, dass** die Beschichtung aus einem Epoxi-Phenol-Lack besteht.

5. Latentwärmespeicher nach einem oder mehreren der vorhergehenden Ansprüche oder insbesondere danach, **dadurch gekennzeichnet, dass** die Beschichtung aus einem Epoxydharzlack besteht.

6. Latentwärmespeicher nach einem oder mehreren der vorhergehenden Ansprüche oder insbesondere danach, **dadurch gekennzeichnet, dass** die Beschichtung eine Teflonbeschichtung ist.

7. Latentwärmespeicher nach einem oder mehreren der vorhergehenden Ansprüche oder insbesondere danach, **dadurch gekennzeichnet, dass** die Beschichtung eine Eloxalbeschichtung ist.

8. Latentwärmespeicher nach einem oder mehreren der vorhergehenden Ansprüche oder insbesondere danach, **dadurch gekennzeichnet, dass** die Beschichtung als Pulverbeschichtung aufgebracht ist.

9. Latentwärmespeicher nach einem oder mehreren der vorhergehenden Ansprüche oder insbesondere danach, **dadurch gekennzeichnet, dass** die inselartige Verbindung (18) lediglich eine durch Umformen gebildete Verbindung ist.

10. Latentwärmespeicher nach einem oder mehreren der vorhergehenden Ansprüche oder insbesondere danach, **dadurch gekennzeichnet, dass** umgebend zu der inselartigen Verbindung (18) eine Einsenkung (16) der Wandung (3,4) in Richtung der gegenüberliegenden Wandung (3, 4) vorgenommen ist.

11. Latentwärmespeicher nach einem oder mehreren der vorhergehenden Ansprüche oder insbesondere danach, **dadurch gekennzeichnet, dass** die Einsenkungen (16) der gegenüberliegenden Wandungen (3, 4) gegeneinander anliegen.

12. Latentwärmespeicher nach einem oder mehreren der vorhergehenden Ansprüche oder insbesondere danach, **dadurch gekennzeichnet, dass** die Einsenkung (16) kreisförmig ausgebildet ist.

13. Latentwärmespeicher nach einem oder mehreren der vorhergehenden Ansprüche oder insbesondere danach, **dadurch gekennzeichnet, dass** die Wandungen (3, 4, 5, 6) aus dünnen Blechen bestehen.

14. Latentwärmespeicher nach einem oder mehreren der vorhergehenden Ansprüche oder insbesondere danach, **dadurch gekennzeichnet, dass** der Latentwärmespeicher (1) praktisch vollständig mit Latentwärmespeichermaterial (2) gefüllt ist derart, dass die beim Phasenwechsel auftretende Volumenänderung durch elastische Verformung der Wandungen (3, 4) aufgenommen ist.

15. Latentwärmespeicher nach einem oder mehreren der vorhergehenden Ansprüche oder insbesondere danach, **dadurch gekennzeichnet, dass** die Bleche an den Randkanten (10) durch Umbördeln und/oder durch Verkleben miteinander verbunden sind.
